# EUROPEAN PATENT SPECIFICATION

(11) **EP 2 946 331 B1**
(45) Date of publication and mention of the grant of the patent: **28.08.2019**
(21) Application number: 14740128.5
(22) Date of filing: 10.01.2014
(51) Int. Cl.: G06F 21/56, G06F 17/00

(54) **CLASSIFYING SAMPLES USING CLUSTERING**
KLASSIFIZIERUNG VON PROBEN DURCH CLUSTERING
CLASSER DES ÉCHANTILLONS AU MOYEN DE L'AGRÉGATION

(30) Priority: 15.01.2013 US 201313742218
(43) Date of publication of application: 25.11.2015
(73) Proprietor: Symantec Corporation, Mountain View, CA 94043 (US)
(72) Inventor: SATISH, Sourabh, Mountain View, CA 94043 (US); SALINAS, Govind, Mountain View, CA 94043 (US); CHEONG, Vincent, Mountain View, CA 94043 (US)
(74) Representative: D Young & Co LLP
(86) International application number: PCT/US2014/010981
(87) International publication number: WO 2014/113281

(56) References cited:
- WO-A1-2012/054339
- US-A- 5 907 834
- US-A1- 2002 161 763
- US-A1- 2005 234 955
- US-A1- 2006 074 821
- US-A1- 2007 271 278
- US-A1- 2008 256 130
- US-A1- 2009 171 956

## Description

### BACKGROUND OF THE INVENTION

### 1. FIELD OF THE INVENTION

This invention pertains in general to computer security and in particular to classifying samples, such as samples of computer files.

### 2. DESCRIPTION OF THE RELATED ART

There is a wide variety of malicious software (malware) that can attack modem computers. Malware threats include computer viruses, worms, Trojan horse programs, spyware, adware, crimeware, and phishing websites. Malware can, for example, surreptitiously capture important information such as logins, passwords, bank account identifiers, and credit card numbers. Similarly, the malware can provide hidden interfaces that allow the attacker to access and control the compromised computer.

Modern malware is often targeted and delivered to only a relative handful of computers. For example, a Trojan horse program can be designed to target computers in a particular department of a particular enterprise. Moreover, even mass-distributed malware can contain polymorphisms that cause the malware to vary over time. Such malware is difficult for security software to detect because there are few instances of the same malware, and the security software might not be configured to recognize the particular instance that has infected a given computer.

Oftentimes, however, different instances of malware are related. For example, multiple seemingly-different malware files might actually be variants of a single type of malware. These variants collectively form a single malware "family." Knowledge of family relationships for malware can be used to improve the detection capabilities of security software.
WO 2012/054339 discloses a computerized rating tool that assists a use in assigning expert ratings (i.e., labels) to a large collection of training images representing samples of a given product.

### BRIEF SUMMARY

Aspects of the invention are defined in the appended claims. The above and other issues are addressed by a method, computer, and computer-readable storage medium for classifying a sample. The method comprises establishing a set of samples containing labeled and unlabeled samples. Values of features are gathered from the labeled and unlabeled samples and a subset of features are selected. The labeled and unlabled samples are clustered together based on similarity of the gathered values of the selected subset of features to produce a set of
clusters, each cluster having a subset of samples from the set of samples. The selecting and clustering steps are recursively iterated on the subset of samples in each cluster in the set of clusters until at least one stopping condition is reached. The iterations produce a cluster having a labeled sample and an unlabeled sample. A label is propagated from the labeled sample in the cluster to the unlabeled sample in the cluster to classify the unlabeled sample.

An embodiment of the computer comprises a non-transitory computer-readable storage medium storing computer program modules executable to perform steps. The steps establish set of samples containing labeled samples and unlabeled samples. Values of features are gathered from the samples and a subset of features are selected. The labeled and unlabeled samples are clustered together based on similarity of the gathered values of the selected subset of features to produce a set of clusters, each cluster having a subset of samples from the set of samples. The selecting and clustering steps are recursively iterated on the subset of samples in each cluster in the set of clusters until at least one stopping condition is reached. The iterations produce a cluster having a labeled sample and an unlabeled sample. A label is propagated from the labeled sample in the cluster to the unlabeled sample in the cluster to classify the unlabeled sample. The computer further comprises a computer processor for executing the computer program modules.

An embodiment of the medium stores computer program modules for classifying a computer file. The computer program modules are executable to perform steps. The steps establish set of samples containing labeled samples and unlabeled samples. Values of features are gathered from the samples and a subset of features are selected. The labeled and unlabeled samples are clustered together based on similarity of the gathered values of the selected subset of features to produce a set of clusters, each cluster having a subset of samples from the set of samples. The selecting and clustering steps are recursively iterated on the subset of samples in each cluster in the set of clusters until at least one stopping condition is reached. The iterations produce a cluster having a labeled sample and an unlabeled sample. A label is propagated from the labeled sample in the cluster to the unlabeled sample in the cluster to classify the unlabeled sample.

### BRIEF DESCRIPTION OF THE DRAWINGS

FIG. 1 is a high-level block diagram of a computing environment according to one embodiment.
FIG. 2 is a high-level block diagram illustrating a typical computer for use as a security server or client.
FIG. 3 is a high-level block diagram illustrating a detailed view of the classification module of the security server according to one embodiment.
FIG. 4 is a flow chart illustrating steps performed by one embodiment of the security server to classify unknown computer files.

The figures depict an embodiment for purposes of illustration only. One skilled in the art will readily recognize from the following description that alternative embodiments of the structures and methods illustrated herein may be employed without departing from the principles described herein.

### DETAILED DESCRIPTION

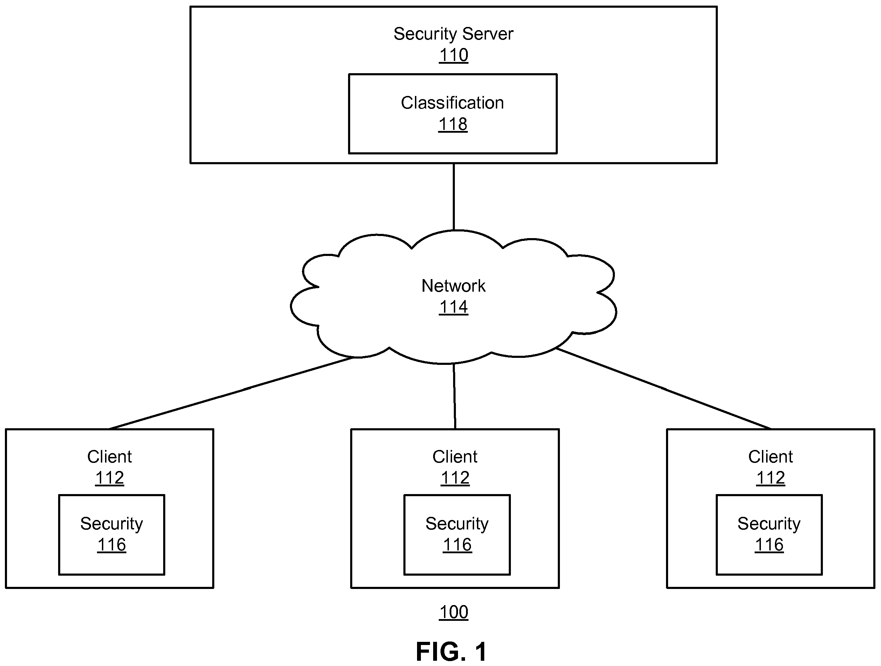

FIG. 1 is a high-level block diagram of a computing environment 100 according to one embodiment. FIG. 1 illustrates a security server 110 and three clients 112 connected by a network 114. Only three clients 112 are illustrated in FIG. 1 in order to simplify and clarify the description. Embodiments of the computing environment 100 can have thousands or millions of clients 112. Some embodiments also have multiple security servers 110.

The clients 112 are electronic devices that can host malicious software. In one embodiment, a client 112 is a conventional computer system executing, for example, a Microsoft Windows-compatible operating system (OS), Apple OS X, and/or a Linux distribution. A client 112 can also be another device having computer functionality, such as a tablet computer, mobile telephone, video game system, etc. The client 112 typically stores numerous computer files that can host malicious software.

Malicious software, sometimes called "malware," is generally defined as software that executes on a client 112 surreptitiously or that has some surreptitious functionality. Malware can take many forms, such as parasitic viruses that attach to legitimate files, worms that exploit weaknesses in the computer's security in order to infect the computer and spread to other computers, Trojan horse programs that appear legitimate but actually contain hidden malicious code, and spyware that monitors keystrokes and/or other actions on the computer in order to capture sensitive information or display advertisements.

The clients 112 execute security modules 116 for detecting the presence of malware on the clients. A security module 116 can be incorporated into the OS of a client 112 or part of a separate comprehensive security package. In one embodiment, the security module 116 is provided by the same entity that operates the security server 110. The security module 116 communicates with the security server 110 via the network 114 to obtain detection data for detecting malware at the client 112.

The detection data obtained by the security module 116 include malware signatures. A malware signature describes attributes of malware that can be used to detect an instance of the malware at the client 112. The attributes may include a string signature that identifies a sequence of data found in computer files that are characteristic of the malware and a sequence of behaviors that are performed by the malware when executing at the client 112. The detection data may also include data that describe other ways to detect malware at the client 112, such as reputations that the security module 116 can use to evaluate whether a given piece of software is malware, and/or heuristics that identify states of the client that are likely to indicate a malware attack.

In one embodiment, the security module 116 monitors the client 112 using the detection data and generates a report if it detects malware. The report notifies a user of the client 112 and/or another entity, such as an administrator of the client 112, of the detected malware. The security module 116 can also perform one or more actions to remediate the malware, such as blocking malicious behavior, quarantining the malware, and removing the malware.

In addition, the security module 116 may provide (e.g., upload) samples of malware and other files detected at the client 112 to the security server 110. A "sample" in one embodiment is data describing an associated computer file. A sample can include the entire file, a portion containing a subset of the file, or a collection of data extracted or derived from the file (e.g. a hash of information in the file). In one embodiment, the security module 116 provides samples of only particular types of files detected at the client 112 to the security server 110, such as samples of only portable executable (PE) files. Samples may also describe data other than computer files.

The security server 110 is a hardware device and/or software module configured to generate and distribute the detection data to the clients 112. An example of the security server 110 is a web-based system providing security software and services to the security modules 116 of the clients 112. Depending on the embodiment, one or more of the functions of the security server 110 can be provided by a cloud computing environment. As used herein, "cloud computing" refers to a style of computing in which dynamically scalable and often virtualized resources are provided as a service over the network 114. Functions attributed to the clients 112 and security modules 116 can also be provided by the cloud computing environment.

One embodiment of the security server 110 includes a classification module 118 for classifying unknown samples as either malware or goodware (i.e., non-malicious). The classification module 118 uses an iterative technique to cluster together labeled and unlabeled samples having similar features. The initial clustering iteration produces clusters of labeled and unlabeled samples having similar features. Subsequent iterations recursively resolve each initial cluster into smaller child clusters. Different subsets of features of the samples are used for different clusters during each iteration of the clustering.

The resulting clusters reveal hierarchical relationships among the samples that might not be revealed using a flat clustering approach. For example, the iterative clustering performed by the classification module 118 may produce a child cluster having unlabeled samples and a parent cluster with samples labeled as known malware, thereby revealing that the unlabeled samples in the child cluster belong to the same malware family as the labeled samples in the parent cluster. The classification module 118 propagates labels and other information among samples in the clusters and thereby classifies previously-unlabeled samples and the associated computer files.

The security server 110 may use the new classifications to generate detection data for the newly-classified computer files. The security server may then distribute the detection data to the security modules 116 of the clients 112. In one embodiment, the security server 110 distributes the detection data on a rolling basis as new data are created. In another embodiment, the detection data are distributed on a predetermined schedule and/or upon request by a security module 116.

The network 114 represents the communication pathways between the security server 110, clients 112, and any other entities on the network. In one embodiment, the network 114 is the Internet and uses standard communications technologies and/or protocols. Thus, the network 114 can include links using technologies such as Ethernet, 802.11, worldwide interoperability for microwave access (WiMAX), 3G, digital subscriber line (DSL), asynchronous transfer mode (ATM), InfiniBand, PCI Express Advanced Switching, etc. Similarly, the networking protocols used on the network 114 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 114 can be represented using technologies and/or formats including the hypertext markup language (HTML), the extensible markup language (XML), etc. In addition, all or some of links can be encrypted using conventional encryption technologies such as secure sockets layer (SSL), transport layer security (TLS), virtual private networks (VPNs), Internet Protocol security (IPsec), etc. In other embodiments, the entities use custom and/or dedicated data communications technologies instead of, or in addition to, the ones described above.

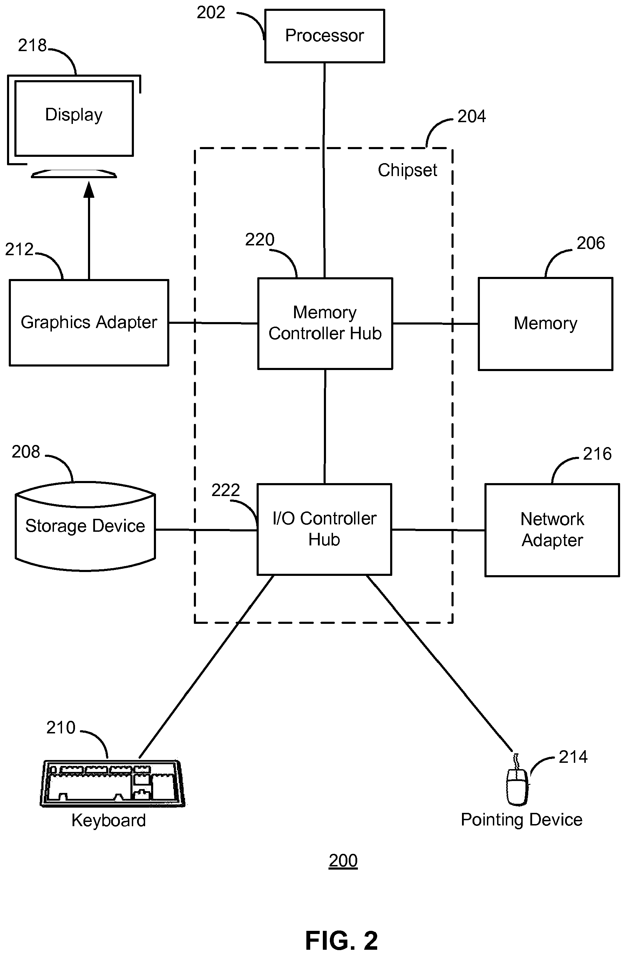

FIG. 2 is a high-level block diagram illustrating a typical computer 200 for use as a security server 110 or client 112. Illustrated are a processor 202 coupled to a chipset 204. Also coupled to the chipset 204 are a memory 206, a storage device 208, a keyboard 210, a graphics adapter 212, a pointing device 214, and a network adapter 216. A display 218 is coupled to the graphics adapter 212. In one embodiment, the functionality of the chipset 204 is provided by a memory controller hub 220 and an I/O controller hub 222. In another embodiment, the memory 206 is coupled directly to the processor 202 instead of the chipset 204.

The storage device 208 is a non-transitory computer-readable storage medium, such as a hard drive, compact disk read-only memory (CD-ROM), DVD, or a solid-state memory device. The memory 206 holds instructions and data used by the processor 202. The pointing device 214 is a mouse, track ball, or other type of pointing device, and is used in combination with the keyboard 210 to input data into the computer system 200. The graphics adapter 212 displays images and other information on the display 218. The network adapter 216 couples the computer system 200 to the network 116.

As is known in the art, a computer 200 can have different and/or other components than those shown in FIG. 2. In addition, the computer 200 can lack certain illustrated components. In one embodiment, a computer 200 acting as a security server is formed of multiple blade computers and lacks a keyboard 210, pointing device 214, graphics adapter 212, and/or display 218. Moreover, the storage device 208 can be local and/or remote from the computer 200 (such as embodied within a storage area network (SAN)).

This description uses the term "module" to refer to computer program logic for providing a specified functionality. A module can be implemented in hardware, firmware, and/or software. A module is typically stored on a computer-readable storage medium such as the storage device 208, loaded into the memory 206, and executed by the processor 202.

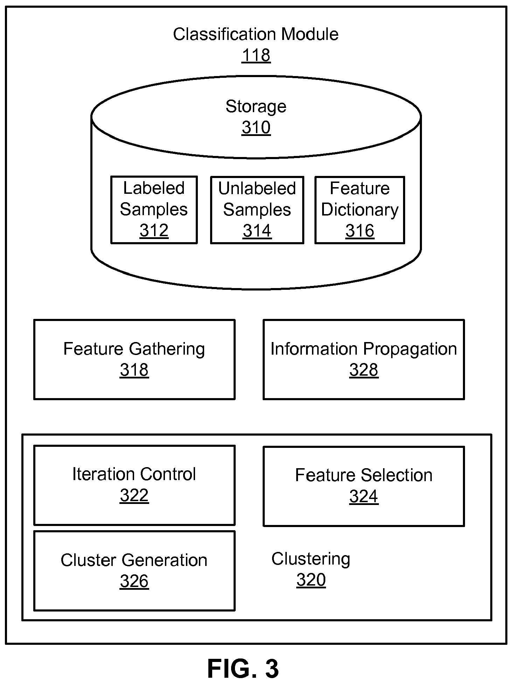

FIG. 3 is a high-level block diagram illustrating a detailed view of the classification module 118 of the security server 110 according to one embodiment. As shown in FIG. 3, classification module 118 itself includes multiple modules. In some embodiments, the functions are distributed among these modules in a different manner than described herein.

A storage module 310 stores data used by the classification module 118. Examples of such data include file samples, intermediate data created and used during the classification process, the resulting classifications, and detection data. The storage module 310 may include a relational database or another type of database.

As shown in FIG. 3, an embodiment of the storage module 310 stores datasets holding computer file samples, including a labeled sample dataset 312 and an unlabeled sample dataset 314. The labeled sample dataset 312 (also called the "labeled dataset") contains samples of files having known labels. In one embodiment, each sample in the labeled dataset 312 is labeled as either goodware or malware. The goodware label indicates that the file associated with the sample is classified as (i.e., known to be) non-malicious. For example, the goodware label may be applied to samples of files from common and/or popular software programs that are frequently present on the clients 112. The malware label indicates that the file associated with the sample is classified as malware.

In one embodiment, the samples are explicitly identified, labeled, and added to the labeled dataset 312 by a human security analyst. For example, the security analyst may create a dataset that includes samples describing a representative population of the most common goodware and malware found on the clients 112. Likewise, the security analyst may create a dataset that describes a broad representation of known types of goodware and malware (e.g., not necessarily the most common goodware and malware). In other embodiments, the samples are labeled and added to the labeled dataset 312 using other techniques, such as via automated techniques performed by the security server 110.

The unlabeled sample dataset 314 (also called the "unlabeled dataset"), in contrast, contains samples of files for which the labels are unknown. Said another way, the samples in the unlabeled dataset 314 are not labeled because it is not known whether the computer files associated with the samples are goodware or malware. Thus, the unlabeled samples have an unknown classification. The samples in the unlabeled dataset 314 may be obtained from the clients 112 and/or from other sources. For example, the unlabeled samples may be received from security modules 116 that detect previously-unknown files at the clients 112. Likewise, the unlabeled samples may be added by a human security analyst.

Further, the storage module 310 stores a feature dictionary 316 that identifies features of the labeled and unlabeled file samples. In one embodiment, the feature dictionary 316 enumerates features of the samples (and, therefore, of the associated files) that may used to distinguish the individual samples in the labeled 312 and unlabeled 314 datasets. A "feature" is thus a characteristic that can vary among the different samples. Some samples may have the same value for given feature while other samples have different values for the feature. In an embodiment where the samples in the labeled 312 and unlabeled 314 datasets are associated with PE files, the feature dictionary 316 enumerates features that can be used to distinguish different PE files. There may be hundreds or thousands of enumerated features in some embodiments.

Specifically, a PE file is a file intended for use with a MICROSOFT WINDOWS-based operating system (OS), such as WINDOWS 7 or WINDOWS 8. Typically, a PE file has the file extension ".EXE," indicating that the file is an executable file, or ".DLL," indicating that the file is a dynamic link library (DLL). A PE file is divided into sections containing either code or data. These sections include a MS-DOS section containing a header, a PE section holding a data structure containing basic information about the file, and a section table containing information about each section in the file, including the section's type, size, and location in the file. Additional sections include a text section holding general-purpose code produced by the compiler or assembler and a data section holding global and static variables. Further, a PE file contains an export table identifying functions exported by the file for use by other programs and an import section identifying modules imported by the file.

For a PE file, the features enumerated by the feature dictionary 316 may include structural features that describe the structure of a PE file. These structural features reflect how the file was constructed, and may be influenced by, for example, the linker used to create the file, the packer used to compress the file (if any), and the libraries used by the file. Structural features include the names of the sections in the file and the names of imported modules referenced by the file. Additional structural features include the number of sections in the file, the number of imported modules referenced by the file, and the number of resource types used in the file. There are no technical restrictions on many of these structural features and, therefore, the values of the features can vary across different files.

Further, the features enumerated by the feature dictionary 316 may include content features that describe content within a PE file. The content features reflect the type and extent of functionality performed by the file when it is executed. Thus, content features of two files with different functionalities may vary even if the structural features of the files are similar (e.g., as might result if the same packer was used to compress each file). Content features include the size of the file and the sizes of the various sections within the file.

In addition to the static features described above, the feature dictionary 316 may also enumerate behavioral features of the files. Behavioral features describe behaviors that the files perform when the files are executed (e.g., run-time behaviors of the files). Behavioral features are more computationally expensive to derive than static features. However, it may be beneficial in some embodiments to include behavioral features in the feature dictionary 316.

Other embodiments of the feature dictionary may describe and enumerate different features than the ones discussed herein. Moreover, embodiments of the feature dictionary may describe features of different types of files, such as features of Executable and Linkable Format (ELF) files used in Linux distributions and Mach Object (Mach-O) files used in OS X.

Turning now to the other modules within the classification module 118, a feature gathering module 318 gathers the values of the features enumerated by the feature dictionary 316 from each sample in the labeled 312 and unlabeled 314 datasets. For example, for a given sample in the labeled dataset 312, the feature gathering module 318 gathers the values of each of the enumerated features from the sample, including the structural and content features mentioned previously. Since the sample describes its associated file, the gathered values also describe the values of the same features of the associated file. The feature gathering module 318 may store the gathered features in the storage module 310 or elsewhere.

A clustering module 320 clusters the file samples in the labeled 312 and unlabeled 314 datasets so that samples having similar features are clustered together. In one embodiment, the clustering module 320 performs the clustering using an iterative and recursive technique. An initial clustering is performed based on all of the samples in the labeled 312 and unlabeled 314 datasets to produce an initial set of clusters. Another clustering is performed on each cluster in the initial set to produce new sets of child clusters derived from each initial parent cluster. The recursive clustering is iterated multiple times, using different subsets of features for each clustering, to produce multiple clusters in hierarchical relationships. Thus, each given cluster aside from those in the root (initial) and leaf (final) nodes has a parent cluster containing a superset of file samples from which it was derived and a child cluster containing a subset of the file samples in the given cluster.

The clustering module 320 includes an iteration control module 322 for controlling the iterative clustering. Generally, the iteration control module 322 repeats the iterative clustering steps until one or more stopping conditions are reached. Stopping conditions used by some embodiments of the iteration control module 322 are described below. Different embodiments of the iteration control module 322 may use additional and/or different stopping conditions than those described herein, and may use combinations of multiple stopping conditions.

The iteration control module 322 may use stopping conditions based on the number of samples in the cluster. In this embodiment, the iteration control module 322 iteratively clusters until the number of samples within a cluster falls below a specified threshold number. Once a given cluster has fewer than the threshold number of samples, the iterative clustering stops for that cluster and the resulting cluster represents the final clustering (i.e., leaf node) for that portion of the cluster hierarchy.

The iteration control module 322 may also use stopping conditions based on the number of clusters. In this embodiment, the iteration control module 322 iteratively clusters until the total number of clusters exceeds a specified threshold number. Once there are more than the threshold number of total clusters, the iterative clustering stops and the resulting clusters represent the final clustering of the samples.

The iteration control module 322 may further use stopping conditions based on the number of available features for the samples on which the clustering may be performed. In this embodiment, the iteration control module 322 iteratively clusters until the number of available features for the samples on which the clustering may be performed falls below a specified threshold number. The number of available features may be based on the number of features for which the samples in the cluster have different values. For example, if there are 1000 total features, and the samples in the cluster have the same values for 990 of the features, there are 10 available features for the cluster.

The iteration control module 322 may also use stopping conditions based on the variation of feature values within a given cluster. In this embodiment, the iteration control module 322 determines the amount of variation among the available features for the samples in the cluster. If the amount of variation for the cluster is within a threshold amount (e.g., whether the points within the cluster overlap with the centroid of the cluster or are within a certain distance threshold), the iteration control module 322 stops the iterative clustering of that cluster.

A feature selection module 324 is activated by the iteration control module 322 and selects the features used in an iteration of the clustering process. In one embodiment, the feature selection module 324 selects a different subset of the features enumerated in the feature dictionary 316 for each cluster during each iteration. In addition, the feature selection module 324 may exclude from selection any features for which the values of the samples to be clustered have no variation since such features do not serve to discriminate the samples. The features from among which the feature selection module 324 selects (e.g., features for which the values of the samples in a cluster are different) are referred to as the "available" or "remaining" features.

In an alternative embodiment, the feature selection module 324 select from among any of the features of the samples for use with a cluster during an iteration. For example, the security analyst may explicitly select features for a clustering iteration of a specific cluster. The analyst may select from among all possible features, regardless of whether the samples in the cluster have variance in the values of particular features.

One embodiment of the feature selection module 324 selects structural features for one or more initial clustering iterations. Since structural features reflect how a file was constructed, different files constructed using the same techniques tend to have the same structural features. For example, file packers (i.e., programs for compressing other executable programs) tend to homogenize the structural features of packed (compressed) files. Thus, files that were packed using the same file packer tend to have common structural features. An initial clustering based on the structural features will therefore tend to cluster together samples associated with files created using the same techniques (e.g., the same packers). Samples associated with files created using different techniques, in turn, will tend to end up in different clusters.

Once the samples in the datasets 312, 314 have been clustered based on structural features, the feature selection module 324 selects from among content features for subsequent clustering iterations. The clusterings based on content features will disregard the structural similarities and instead cluster based on the similarity of content within the files (e.g., based on features reflecting the functionality performed by the file when executed). Thus, the clustering based on content features tends to place file samples from the same malware family in the same cluster. Different malware families that use the same packer, and any legitimate software that also uses the packer, will tend to end up in different clusters (that are children of the initial cluster based on the structural features).

The feature selection module 324 may select content features using one or more of a variety of techniques. The feature selection module 324 may select a random subset of the available features for a next clustering iteration. Additionally, the feature selection module 324 may determine the amount of variance in the values of the samples in the cluster for the available features, and then select the n features having the least variance for a next clustering iteration, where "n" is an integer. Other embodiments of the features selection module 324 may use different and/or additional techniques to select from among the available content features.

A cluster generation module 326 is activated by the iteration control module 322 and clusters file samples using the features selected by the feature selection module 324. The samples clustered by the cluster generation module 326 depend upon which iteration of the clustering is being performed. For the initial iteration, the cluster generation module 326 clusters all of the samples in both the labeled 312 and unlabeled 314 datasets. During subsequent iterations, the cluster generation module 326 clusters only the samples that are within a given cluster produced during a previous iteration.

For a given set of samples and set of selected features, the cluster generation module 326 generates multiple clusters each having one or more samples having similar values for the selected features. As part of this process, the cluster generation module 326 compares the values of the selected features for each sample in the set to determine which samples are similar to which other samples. Samples having at least a threshold amount of similarity are clustered together. In one embodiment, the cluster generation module 326 uses edit distance as a measure of similarity and clusters together samples having values for the selected features that are within a threshold number of edits. In addition, different embodiments of the cluster generation module 326 may use different and/or additional similarity measures.

The similarity threshold can vary depending upon the embodiment. In one embodiment, the cluster generation module 326 uses different similarity thresholds for different clustering iterations. Specifically, the cluster generation module 326 uses a low similarity threshold (i.e., a loose similarity threshold) for the initial clustering iteration. The low similarity threshold causes relatively dissimilar file samples to be clustered together and results in fewer clusters each containing more samples. For subsequent clustering iterations, the cluster generation module 326 uses increasingly higher similarity thresholds (i.e., increasing stricter similarity thresholds). The higher similarity thresholds cause only relatively similar file samples to be clustered together and result in more clusters each containing fewer samples.

An information propagation module 328 propagates labels and other information among samples in a cluster and/or among clusters. In one embodiment, the information propagation module 328 activates after the iteration control module 322 reaches a stopping condition and stops iterating. At this point, there are multiple clusters, with each cluster containing one or more samples. Since the clusters are initially derived from a combination of the labeled 312 and unlabeled 314 datasets, the samples in a given cluster may contain all labeled samples, all unlabeled samples, or a mix of labeled and unlabeled samples. In this latter case, the information propagation module 328 may propagate the label and other information from the labeled samples in the cluster to the unlabeled samples in the cluster.

Typically, the clustering process will have clustered together related samples, such as samples within a same malware family. If at least one of the samples in the cluster is labeled (e.g., as malware), the information propagation module 328 propagates this label to the other samples in the cluster. This propagation thereby classifies the files associated with the other samples according to the propagated label. The propagation module 328 may also propagate other information known about the file having the propagated label, such as information about the type of malware it represents, the severity of the malware, and how to remediate the malware.

For example, the clustering may produce a cluster containing one sample having a label identifying it as malware, and four samples having unknown labels. The labeled sample is associated with a file containing a known type of malware. The other four samples are likely to contain the same malicious code found in the known malware since the files in the cluster all have similar features. Therefore, the propagation module 328 propagates the label and other information from the labeled sample to the four unlabeled samples and, by extension, to the files associated with the unlabeled files. In this manner, the files associated with the (previously) unlabeled files are classified as malware. In addition, the cluster of samples describes a malware family.

The information propagation module 328 may also propagate labels and other information within the hierarchy of clusters. Particularly, the information propagation module 328 may propagate information associated with a labeled sample in a given parent cluster to unlabeled samples in a child cluster. Consider an example where one or more samples in a parent cluster are labeled (e.g., as malware), but none of the samples in a child of the parent cluster are labeled. In this case, it is likely that the unlabeled samples in the child cluster represent a variant of the malware family that was previously undetected since the samples by definition have features in common with the malware-labeled samples in the parent cluster. Therefore, the information propagation module 328 may propagate the label and other information from the labeled sample to the unlabeled samples in the child cluster.

The information propagation module 328 may use other techniques to propagate labels. For example, if a cluster resulting from the completed clustering process contains samples with different labels (e.g., includes a sample labeled as malware and a sample labeled as goodware) an embodiment of the information propagation module 328 may propagate the majority label or other label identified as being statistically significant to the unlabeled samples in the cluster. The information propagation module 328 may also report any samples having labels different than the propagated label to the security analyst. The fact that two samples were clustered together despite having different labels may indicate that a sample in the labeled dataset 312 is mislabeled. The security analyst can investigate the report from the information propagation module 328 and remediate the mislabeled sample.

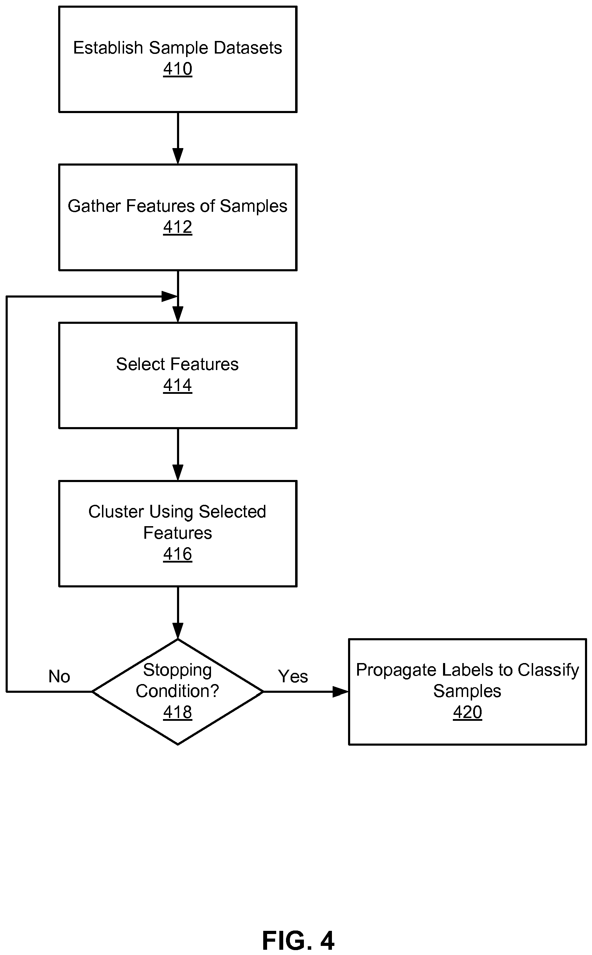

FIG. 4 is a flow chart illustrating steps performed by one embodiment of the security server 110 to classify unknown computer files. Other embodiments can perform different and/or additional steps. Moreover, other embodiments can perform the steps in different orders. Further, some or all of the steps can be performed by entities other than the security server 110.

Initially, the computer file sample datasets are established 410. The sample datasets include the labeled dataset 312 and the unlabeled dataset 314. Collectively, the samples in the labeled 312 and unlabeled datasets form a set of samples containing labeled and unlabeled samples. The security server 110 gathers 412 values of the features enumerated in the feature dictionary 316 from the samples in the datasets 312, 314, including both structural and content features. For example, if the feature dictionary 316 enumerates the number of sections in a file as a feature, the security server 110 gathers the number of sections from each file sample in the labeled 312 and unlabeled datasets 314.

The security server 110 iteratively and recursively clusters the file samples in the labeled 312 and unlabeled 314 datasets. The security server 110 selects 414 a subset of the features enumerated in the feature dictionary 316 for use in a clustering iteration. Thus, for the first iteration the security server 110 selects 414 a subset of features for use in clustering all of the samples in the labeled 312 and unlabeled datasets 314. For a subsequent clustering iteration, the security server 110 selects a subset of features for use in clustering the samples in a cluster created in the previous iteration.

An embodiment of the security server 110 selects 414 features from among a set of available features. In one embodiment, the available features are features for which the values of samples in the cluster to be further clustered have variation. The security server 110 may select 414 structural features of the files for one or more initial clustering iterations. Thus, for the first clustering iteration, the security server 110 may select 414 structural features such as the names of file sections and the number of imported modules. After the initial clustering iterations, an embodiment of the security server 110 selects 414 from among content features of the files.

The security server 110 clusters 416 the file samples using the selected features. Generally, the security server 110 clusters 416 together file samples having similar values for the selected features. The threshold amount of similarity required to cluster samples together may vary in different embodiments. In one embodiment, the security server 110 uses a low similarity threshold for the initial iteration of clustering, and uses higher similarity thresholds for subsequent iterations.

Each clustering iteration produces a set of clusters. The initial clustering iteration clusters the samples in the labeled 312 and unlabeled 314 datasets into a set of initial clusters. Subsequent clustering iterations cluster each initial cluster into a set of child clusters, with each child cluster containing a subset of the clusters in its parent cluster. The security server 110 iteratively repeats the clustering using features selecting from among the set of available features for each cluster produced by a prior iteration to produce a hierarchy of clusters. At the top of the hierarchy is a single cluster representing the combined labeled 312 and unlabeled 314 datasets (the root cluster). At the bottom of the hierarchy are clusters representing the final clustering (the leaf clusters). In between the root and leaf clusters are intermediate clusters, each having a parent cluster and multiple child clusters.

The security server 110 recursively and iteratively repeats the feature selection 414 and clustering 416 steps until a stopping condition is present. In one embodiment, the security server 110 determine 418 whether a stopping condition is reached for each cluster produced during the previous clustering iteration. A stopping condition may be based on, for example, the number of clusters produced by the previous iterations, the number of samples within the cluster, the number of available features on which clustering may be performed, and the amount of variation of features within the cluster. If 418 no stopping conditions are present, the security server 110 repeats the feature selection 414 and clustering 416 steps.

Once the security server 110 determines 418 that a stopping condition is reached for a cluster, the security server optionally propagates 420 labels and other information among the samples in the cluster. The security server 110 may perform the propagation 420 on each cluster when a stopping condition is reached for that cluster, may perform the propagation 420 after stopping conditions are reached for all clusters, or may perform the propagation at other times.

In one embodiment, the security server 110 propagates 420 labels within a cluster if the cluster contains at least one labeled sample and at least one unlabeled sample. In this case, the security server 110 may propagate 110 the label of the labeled sample to the unlabeled sample, thereby classifying the file associated with the (previously) unlabeled sample. The security server 110 may also propagate other information about the file associated with the labeled sample to the file associated with the unlabeled sample. The security server 110 may further propagate labels and other information within the cluster hierarchy, such as by propagating a label of a sample in a parent cluster to unlabeled samples in a child cluster.

The security server 110 may then perform other operations on the files classified through the above-described clustering technique. For example, a security analyst may analyze files that are newly-classified as malware to generate detection data for the files. The detection data may then be supplied to security modules 116 in clients 112 in order to improve the detection of malware at the clients.

While the clustering technique is described above primarily in the context of clustering samples associated with computer files, the technique may also be used in other environments. The technique is application to any data and domain where there is anticipation that the data have a hierarchical relationship. For example, textual documents about academic subjects may be clustered at a high level as being related to science, finance, mathematics, etc. The high-level clusters may then be clustered into lower-level clusters related to specific aspects of the subjects. For instance, the documents in the science cluster may be clustered into sub-clusters related to physics, biology, and chemistry.

The above description is included to illustrate the operation of certain embodiments and is not meant to limit the scope of the invention. The scope of the invention is to be limited only by the following claims. From the above discussion, many variations will be apparent to one skilled in the relevant art that would yet be encompassed by the scope of the invention.

## Claims

1. A computer-implemented method of classifying a file comprising:
establishing a set of samples associated with the file containing labeled and unlabeled samples;
gathering values of features from the labeled and unlabeled samples;
selecting a subset of the features;
clustering together labeled and unlabeled samples having at least a threshold measure of similarity among the gathered values of the selected subset of features to produce a set of clusters, each cluster having a subset of samples from the set of samples;
recursively iterating the selecting and clustering steps on the subset of samples in each cluster in the set of clusters until at least one stopping condition is reached, wherein there are a plurality of iterations of the selecting and clustering steps, a first clustering iteration uses a first threshold measure of similarity and subsequent clustering iterations use increasingly stricter similarity thresholds, the iterations produce a cluster having at least one labeled sample and at least one unlabeled sample, and the selecting step selects different subsets of the features for different iterations of the plurality of iterations by:
determining an amount of variance in values of features of samples in a cluster of the set of clusters produced by a clustering iteration; and
selecting a subset of features for a subsequent clustering iteration responsive to the determined amount of variance in values of features of samples in the cluster of the set of clusters produced by the clustering iteration; and after the at least one stopping condition is reached,
propagating a label from the at least one labeled sample in the cluster to the at least one unlabeled sample in the cluster to classify the file associated with the at least one unlabeled sample.

2. The method of claim 1, wherein gathering values of features comprises:
accessing a feature dictionary enumerating features that may distinguish the labeled and unlabeled samples; and
gathering values of the enumerated features from the labeled and unlabeled samples.

3. The method of claim 2, wherein the enumerated features comprise features of portable executable (PE) computer files, the labeled samples are associated with labeled computer files, and the unlabeled samples are associated with unlabeled computer files.

4. The method of claim 1, wherein selecting a subset of features for a subsequent clustering iteration comprises:
selecting a feature having a least amount of variance for a next clustering iteration.

5. The method of claim 1, wherein the features comprise structural features describing structures of the labeled and unlabeled samples and content features describing content within the labeled and unlabeled samples, and wherein selecting a subset of features comprises:
selecting the subset from among only the structural features for one or more initial iterations; and
selecting the subset from among the structural features and the content features for one or more subsequent iterations occurring after the initial iterations.

6. The method of claim 1, wherein clustering the labeled and unlabeled samples together based on similarity of the gathered values of the selected subset of features comprises:
clustering together labeled and unlabeled samples having at least a threshold measure of similarity among the gathered values of the selected subset of features, wherein different threshold measures of similarity are used for different iterations.

7. The method of claim 1, wherein the at least one stopping condition comprises a stopping condition based on at least one of: a number of samples in the cluster, a total number of clusters, and a variation of feature values of the samples within the cluster.

8. The method of claim 1, wherein the iterations produce a set of hierarchical clusters including the cluster and a child cluster beneath the cluster in a hierarchy, further comprising:
propagating the label from the labeled sample in the cluster to an unlabeled sample in the child cluster.

9. A computer for classifying a file, comprising:
a non-transitory computer-readable storage medium storing computer program modules executable to perform steps comprising:
establishing a set of samples associated with the file containing labeled samples and unlabeled samples;
gathering values of features from the labeled and unlabeled samples;
selecting a subset of the features;
clustering together labeled and unlabeled samples having at least a threshold measure of similarity among the gathered values of the selected subset of features to produce a set of clusters, each cluster having a subset of samples from the set of samples;
recursively iterating the selecting and clustering steps on the subset of samples in each cluster in the set of clusters until at least one stopping condition is reached, wherein there are a plurality of iterations of the selecting and clustering steps, a first clustering iteration uses a first threshold measure of similarity and subsequent clustering iterations use increasingly stricter similarity thresholds, the iterations produce a cluster having at least one labeled sample and at least one unlabeled sample, and the selecting step selects different subsets of the features for different iterations of the plurality of iterations by:
determining an amount of variance in values of features of samples in a cluster of the set of clusters produced by a clustering iteration; and
selecting a subset of features for a subsequent clustering iteration responsive to the determined amount of variance in values of features of samples in the cluster of the set of clusters produced by the clustering iteration; and after the at least one stopping condition is reached,
propagating a label from the at least one labeled sample in the cluster to the at least one unlabeled sample in the cluster to classify the file associated with the at least one unlabeled sample; and
a computer processor for executing the computer program modules.

10. The computer of claim 9, wherein gathering values of features comprises:
accessing a feature dictionary enumerating features that may distinguish the labeled and unlabeled samples; and
gathering values of the enumerated features from the labeled and unlabeled samples.

11. The computer of claim 9, wherein selecting a subset of features for a subsequent clustering iteration comprises:
selecting a feature having a least amount of variance for a next clustering iteration.

12. The computer of claim 9, wherein the features comprise structural features describing structures of the labeled and unlabeled samples and content features describing content within the labeled and unlabeled samples, and wherein selecting a subset of features comprises:
selecting the subset from among only the structural features for one or more initial iterations; and
selecting the subset from among the structural features and the content features for one or more subsequent iterations occurring after the initial iterations.

13. The computer of claim 9, wherein clustering the labeled and unlabeled samples together based on similarity of the gathered values of the selected subset of features comprises:
clustering together labeled and unlabeled samples having at least a threshold measure of similarity among the gathered values of the selected subset of features, wherein different threshold measures of similarity are used for different iterations.

14. The computer of claim 9, wherein the iterations produce a set of hierarchical clusters including the cluster and a child cluster beneath the cluster in a hierarchy, the executable computer program modules further executable to propagate the label from the labeled sample in the cluster to an unlabeled sample in the child cluster.

15. A non-transitory computer-readable storage medium storing computer program modules executable to perform the method of any one of claims 1 to 8.

## Patentansprüche

1. Computer-implementiertes Verfahren zur Klassifizierung einer Datei, umfassend:
Erstellen einer Reihe von Proben, die mit der Datei verknüpft sind und bezeichnete sowie unbezeichnete Proben enthalten;
Sammeln von Merkmalwerten aus den bezeichneten und unbezeichneten Proben;
Auswählen einer Teilmenge der Merkmale;
Gruppieren von bezeichneten und unbezeichneten Proben mit wenigstens einem Schwellwertmaß der Ähnlichkeit zwischen den gesammelten Werten der ausgewählten Teilmenge, um eine Reihe von Gruppen zu erzeugen, wobei jede Gruppe eine Teilmenge der Proben aus der Reihe von Proben aufweist;
rekursives Wiederholen der Schritte des Auswählens und des Gruppierens an der Teilmenge der Proben in jeder Gruppe der Reihe von Gruppen, bis wenigstens eine Stoppbedingung erreicht ist, wobei es mehrere Wiederholungen der Schritte des Auswählens und des Gruppierens gibt, wobei eine erste Wiederholung des Gruppierens ein erstes Schwellwertmaß der Ähnlichkeit verwendet und nachfolgende Wiederholungen des Gruppierens zunehmend strengere Ähnlichkeitsschwellwerte verwenden, wobei die Wiederholungen eine Gruppe erzeugen, die wenigstens eine bezeichnete Probe und wenigstens eine unbezeichnete Probe aufweist, und wobei der Schritt des Auswählens verschiedene Teilmengen der Merkmale für verschiedene Wiederholungen der mehreren Wiederholungen auswählt durch:
Bestimmen eines Betrags der Abweichung in den Merkmalwerten der Proben in einer Gruppe der Reihe von Gruppen, die durch die Wiederholung des Gruppierens erzeugt wurde; und
Auswählen einer Teilmenge von Merkmalen für eine nachfolgende Wiederholung des Gruppierens in Reaktion auf den bestimmten Betrag der Abweichung in den Merkmalwerten der Proben in der Gruppe der Reihe von Gruppen, die durch die Wiederholung des Gruppierens erzeugt wurde; und nachdem die wenigstens eine Stoppbedingung erreicht ist,
Weitergeben einer Bezeichnung von der wenigstens einen bezeichneten Probe in der Gruppe an die wenigstens eine unbezeichnete Probe in der Gruppe, um die Datei zu klassifizieren, die mit der wenigstens einen unbezeichneten Probe verknüpft ist.

2. Verfahren nach Anspruch 1, wobei das Sammeln von Merkmalwerten umfasst:
Zugreifen auf ein Merkmallexikon, welches Merkmale auflistet, die die bezeichneten und unbezeichneten Proben unterscheiden können; und
Sammeln von Werten der aufgelisteten Merkmale aus den bezeichneten und unbezeichneten Proben.

3. Verfahren nach Anspruch 2, wobei die aufgelisteten Merkmale Merkmale portierbarer ausführbarer (portable executable, PE) Computerdateien umfassen, wobei die bezeichneten Proben mit bezeichneten Computerdateien verknüpft sind und die unbezeichneten Proben mit unbezeichneten Computerdateien verknüpft sind.

4. Verfahren nach Anspruch 1, wobei das Auswählen einer Teilmenge von Merkmalen für eine nachfolgende Wiederholung des Gruppierens umfasst:
Auswählen eines Merkmals mit einem geringsten Betrag der Abweichung für eine nachfolgende Wiederholung des Gruppierens.

5. Verfahren nach Anspruch 1, wobei die Merkmale Strukturmerkmale, die Strukturen der bezeichneten und unbezeichneten Proben beschreiben, und Inhaltsmerkmale, die Inhalt in den bezeichneten und unbezeichneten Proben beschreiben, umfassen, und wobei das Auswählen einer Teilmenge der Merkmale umfasst:
Auswählen der Teilmenge aus nur den Strukturmerkmalen für eine oder mehrere anfängliche Wiederholung(en); und
Auswählen der Teilmenge aus den Strukturmerkmalen und den Inhaltsmerkmalen für eine oder mehrere Wiederholungen, die nach den anfänglichen Wiederholungen erfolgen.

6. Verfahren nach Anspruch 1, wobei das Gruppieren der bezeichneten und unbezeichneten Proben basierend auf einer Ähnlichkeit der gesammelten Werte der ausgewählten Teilmenge von Merkmalen umfasst:
Gruppieren von bezeichneten und unbezeichneten Proben mit wenigstens einem Schwellwertmaß der Ähnlichkeit zwischen den gesammelten Werten der ausgewählten Teilmenge, wobei verschiedene Schwellwertmaße der Ähnlichkeit für verschiedene Wiederholungen verwendet werden.

7. Verfahren nach Anspruch 1, wobei die wenigstens eine Stoppbedingung eine Stoppbedingung umfasst, die auf wenigstens einem der folgenden basiert: einer Anzahl von Proben in der Gruppe, einer Gesamtzahl der Gruppen und einer Änderung der Merkmalwerte der Proben in der Gruppe.

8. Verfahren nach Anspruch 1, wobei die Wiederholungen eine Reihe von hierarchischen Gruppen erzeugen, die die Gruppe und eine untergeordnete Gruppe unterhalb der Gruppe in einer Hierarchie aufweist, ferner umfassend:
Weitergeben der Bezeichnung von der bezeichneten Probe in der Gruppe an eine unbezeichnete Probe in der untergeordneten Gruppe.

9. Computer zur Klassifizierung einer Datei, umfassend:
ein nichttransitorisches, computerlesbares Speichermedium, das Computerprogrammmodule speichert, die ausführbar sind, um Schritte durchzuführen, welche umfassen:
Erstellen einer Reihe von Proben, die mit der Datei verknüpft sind und bezeichnete Proben und unbezeichnete Proben enthalten;
Sammeln von Merkmalwerten aus den bezeichneten und unbezeichneten Proben;
Auswählen einer Teilmenge der Merkmale;
Zusammenfassen zu Gruppen von beschrifteten und unbeschrifteten Proben mit wenigstens einem Schwellwertmaß der Ähnlichkeit zwischen den gesammelten Werten der ausgewählten Teilmenge, um eine Reihe von Gruppen zu erzeugen, wobei jede Gruppe eine Teilmenge der Proben aus der Reihe von Proben aufweist;
rekursives Wiederholen der Schritte des Auswählens und des Gruppierens an der Teilmenge der Proben in jeder Gruppe der Reihe von Gruppen, bis wenigstens eine Stoppbedingung erreicht ist, wobei es mehrere Wiederholungen der Schritte des Auswählens und des Gruppierens gibt, wobei eine erste Wiederholung des Gruppierens ein erstes Schwellwertmaß der Ähnlichkeit verwendet und nachfolgende Wiederholungen des Gruppierens zunehmend strengere Ähnlichkeitsschwellwerte verwenden, wobei die Wiederholungen eine Gruppe erzeugen, die wenigstens eine bezeichnete Probe und wenigstens eine unbezeichnete Probe aufweist, und wobei der Schritt des Auswählens verschiedene Teilmengen der Merkmale für verschiedene Wiederholungen der mehreren Wiederholungen auswählt durch:
Bestimmen eines Betrags der Abweichung in den Merkmalwerten der Proben in einer Gruppe der Reihe von Gruppen, die durch die Wiederholung des Gruppierens erzeugt wurde; und
Auswählen einer Teilmenge von Merkmalen für eine nachfolgende Wiederholung des Gruppierens in Reaktion auf den bestimmten Betrag der Abweichung in den Merkmalwerten der Proben in der Gruppe der Reihe von Gruppen, die durch die Wiederholung des Gruppierens erzeugt wurde; und nachdem die wenigstens eine Stoppbedingung erreicht ist,
Weitergeben einer Bezeichnung von der wenigstens einen bezeichneten Probe in der Gruppe an die wenigstens eine unbezeichnete Probe in der Gruppe, um die Datei zu klassifizieren, die mit der wenigstens einen unbezeichneten Probe verknüpft ist; und
einen Computerprozessor zum Ausführen der Computerprogrammmodule.

10. Computer nach Anspruch 9, wobei das Sammeln von Merkmalwerten umfasst:
Zugreifen auf ein Merkmallexikon, welches Merkmale auflistet, die die bezeichneten und unbezeichneten Proben unterscheiden können; und
Sammeln von Werten der aufgelisteten Merkmale aus den bezeichneten und unbezeichneten Proben.

11. Computer nach Anspruch 9, wobei das Auswählen einer Teilmenge von Merkmalen für eine nachfolgende Wiederholung des Gruppierens umfasst:
Auswählen eines Merkmals mit einem geringsten Betrag der Abweichung für eine nachfolgende Wiederholung des Gruppierens.

12. Computer nach Anspruch 9, wobei die Merkmale Strukturmerkmale, die Strukturen der bezeichneten und unbezeichneten Proben beschreiben, und Inhaltsmerkmale, die Inhalt in den bezeichneten und unbezeichneten Proben beschreiben, umfassen, und wobei das Auswählen einer Teilmenge der Merkmale umfasst:
Auswählen der Teilmenge aus nur den Strukturmerkmalen für eine oder mehrere anfängliche Wiederholung(en); und
Auswählen der Teilmenge aus den Strukturmerkmalen und den Inhaltsmerkmalen für eine oder mehrere Wiederholungen, die nach den anfänglichen Wiederholungen erfolgen.

13. Computer nach Anspruch 9, wobei das Gruppieren der bezeichneten und unbezeichneten Proben basierend auf einer Ähnlichkeit der gesammelten Werte der ausgewählten Teilmenge von Merkmalen umfasst:
Gruppieren von bezeichneten und unbezeichneten Proben mit wenigstens einem Schwellwertmaß der Ähnlichkeit zwischen den gesammelten Werten der ausgewählten Teilmenge, wobei verschiedene Schwellwertmaße der Ähnlichkeit für verschiedene Wiederholungen verwendet werden.

14. Computer nach Anspruch 9, wobei die Wiederholungen eine Reihe hierarchischer Gruppen erzeugen, die die Gruppe und eine untergeordnete Gruppe unterhalb der Gruppe in einer Hierarchie aufweisen, wobei die ausführbaren Computerprogrammmodule ferner ausführbar sind zum Weitergeben der Bezeichnung von der bezeichneten Probe in der Gruppe an eine unbezeichnete Probe in der untergeordneten Gruppe.

15. Nichttransitorisches, computerlesbares Speichermedium, das Computerprogrammmodule speichert, die ausführbar sind, um das Verfahren nach einem der Ansprüche 1 bis 8 durchzuführen.

## Revendications

1. Procédé de classement de fichier mis en oeuvre par ordinateur, comprenant les étapes consistant à :
établir un ensemble d'échantillons associés au fichier, contenant des échantillons étiquetés et non étiquetés ;
rassembler des valeurs de caractéristiques à partir des échantillons étiquetés et non étiquetés ;
sélectionner un sous-ensemble des caractéristiques ;
réunir par agrégation les échantillons étiquetés et non étiquetés ayant au moins un seuil de mesure de similarité parmi les valeurs rassemblées du sous-ensemble de caractéristiques sélectionné afin de produire un ensemble d'agrégats, chaque agrégat ayant un sous-ensemble d'échantillons provenant de l'ensemble d'échantillons ;
réitérer récursivement les étapes de sélection et d'agrégation sur le sous-ensemble d'échantillons dans chaque agrégat de l'ensemble d'agrégats jusqu'à ce qu'au moins une condition d'arrêt soit atteinte, de telle façon qu'il y ait une pluralité d'itérations des étapes de sélection et d'agrégation, une première itération d'agrégation utilisant un premier seuil de mesure de similarité et les itérations d'agrégation suivantes utilisant des seuils de similarité de plus en plus stricts, les itérations produisant un agrégat possédant au moins un échantillon étiqueté et au moins un échantillon non étiqueté, et l'étape de sélection sélectionnant différents sous-ensembles des caractéristiques sur différentes itérations de la pluralité d'itérations en :
déterminant une quantité de variance dans les valeurs de caractéristiques des échantillons d'un agrégat de l'ensemble des agrégats produits par une itération d'agrégation ; et
en
sélectionnant un sous-ensemble de caractéristiques sur une itération d'agrégation suivante en réponse à la quantité de variance déterminée dans les valeurs de caractéristiques des échantillons de l'agrégat de l'ensemble des agrégats produits par l'itération d'agrégation ; et après que ladite au moins une condition d'arrêt a été atteinte, en
propageant une étiquette depuis ledit au moins un échantillon étiqueté de l'agrégat vers ledit au moins un échantillon non étiqueté de l'agrégat pour classer le fichier associé avec ledit au moins un échantillon non étiqueté.

2. Procédé selon la revendication 1, dans lequel l'étape consistant à rassembler des valeurs de caractéristiques consiste à :
accéder à un dictionnaire de caractéristiques énumérant des caractéristiques qui permettent de distinguer les échantillons étiquetés et non étiquetés ; et
rassembler les valeurs des caractéristiques énumérées à partir des échantillons étiquetés et non étiquetés.

3. Procédé selon la revendication 2, dans lequel les caractéristiques énumérées comprennent des caractéristiques de fichiers d'ordinateur portables exécutables (PE), les échantillons étiquetés sont associés aux fichiers d'ordinateur étiquetés, et les échantillons non étiquetés sont associés aux fichiers d'ordinateur non étiquetés.

4. Procédé selon la revendication 1, dans lequel l'étape consistant à sélectionner un sous-ensemble de caractéristiques sur une itération d'agrégation suivante consiste à :
sélectionner une caractéristique ayant une quantité de variance la plus faible sur une prochaine itération d'agrégation.

5. Procédé selon la revendication 1, dans lequel les caractéristiques comprennent des caractéristiques structurelles décrivant des structures des échantillons étiquetés et non étiquetés et des caractéristiques de contenu décrivant le contenu des échantillons étiquetés et non étiquetés, et dans lequel l'étape consistant à sélectionner un sous-ensemble de caractéristiques consiste à :
sélectionner le sous-ensemble uniquement dans les caractéristiques structurelles sur une ou plusieurs itérations initiales ; et
sélectionner le sous-ensemble dans les caractéristiques structurelles et les caractéristiques de contenu sur une ou plusieurs itérations suivantes se produisant après les itérations initiales.

6. Procédé selon la revendication 1, dans lequel l'étape consistant à réunir par agrégation les échantillons étiquetée et non étiquetés d'après la similarité des valeurs rassemblées du sous-ensemble de caractéristiques sélectionné consiste à :
réunir par agrégation les échantillons étiquetés et non étiquetés ayant au moins un seuil de mesure de similarité parmi les valeurs rassemblées du sous-ensemble de caractéristiques sélectionné, différents seuils de mesure de similarité étant utilisés sur différentes itérations.

7. Procédé selon la revendication 1, dans lequel ladite au moins une condition d'arrêt comprend une condition d'arrêt basée sur au moins un des éléments suivants : un nombre d'échantillons présents dans l'agrégat, un nombre total d'agrégats, une variation des valeurs de caractéristiques des échantillons présents dans l'agrégat.

8. Procédé selon la revendication 1, dans lequel les itérations produisent un ensemble d'agrégats hiérarchiques contenant l'agrégat et un agrégat enfant situé sous l'agrégat dans une hiérarchie, comprenant également l'étape consistant à :
propager l'étiquette depuis l'échantillon étiqueté de l'agrégat vers un échantillon non étiqueté de l'agrégat enfant.

9. Ordinateur de classement de fichier, comprenant :
un support de stockage non transitoire lisible par ordinateur servant à stocker des modules de programme d'ordinateur exécutables pour mettre en oeuvre les étapes consistant à :
établir un ensemble d'échantillons associés au fichier, contenant des échantillons étiquetés et non étiquetés ;
rassembler des valeurs de caractéristiques à partir des échantillons étiquetés et non étiquetés ;
sélectionner un sous-ensemble des caractéristiques ;
réunir par agrégation les échantillons étiquetés et non étiquetés ayant au moins un seuil de mesure de similarité parmi les valeurs rassemblées du sous-ensemble de caractéristiques sélectionné afin de produire un ensemble d'agrégats, chaque agrégat ayant un sous-ensemble d'échantillons provenant de l'ensemble d'échantillons ;
réitérer récursivement les étapes de sélection et d'agrégation sur le sous-ensemble d'échantillons dans chaque agrégat de l'ensemble d'agrégats jusqu'à ce qu'au moins une condition d'arrêt soit atteinte, de telle façon qu'il y ait une pluralité d'itérations des étapes de sélection et d'agrégation, une première itération d'agrégation utilisant un premier seuil de mesure de similarité et les itérations d'agrégation suivantes utilisant des seuils de similarité de plus en plus stricts, les itérations produisant un agrégat possédant au moins un échantillon étiqueté et au moins un échantillon non étiqueté, et l'étape de sélection sélectionnant différents sous-ensembles des caractéristiques sur différentes itérations de la pluralité d'itérations en :
déterminant une quantité de variance dans les valeurs de caractéristiques des échantillons d'un agrégat de l'ensemble des agrégats produits par une itération d'agrégation ; et
en
sélectionnant un sous-ensemble de caractéristiques sur une itération d'agrégation suivante en réponse à la quantité de variance déterminée dans les valeurs de caractéristiques des échantillons de l'agrégat de l'ensemble des agrégats produits par l'itération d'agrégation ; et après que ladite au moins une condition d'arrêt a été atteinte, en
propageant une étiquette depuis ledit au moins un échantillon étiqueté de l'agrégat vers ledit au moins un échantillon non étiqueté de l'agrégat pour classer le fichier associé avec ledit au moins un échantillon non étiqueté ; et
un processeur d'ordinateur servant à exécuter les modules de programme d'ordinateur.

10. Ordinateur selon la revendication 9, dans lequel le rassemblement des valeurs de caractéristiques consiste à :
accéder à un dictionnaire de caractéristiques énumérant des caractéristiques qui permettent de distinguer les échantillons étiquetés et non étiquetés ; et
rassembler les valeurs des caractéristiques énumérées à partir des échantillons étiquetés et non étiquetés.

11. Ordinateur selon la revendication 9, dans lequel la sélection d'un sous-ensemble de caractéristiques sur une itération d'agrégation suivante consiste à :
sélectionner une caractéristique ayant une quantité de variance la plus faible sur une prochaine itération d'agrégation.

12. Ordinateur selon la revendication 9, dans lequel les caractéristiques comprennent des caractéristiques structurelles décrivant des structures des échantillons étiquetés et non étiquetés et des caractéristiques de contenu décrivant le contenu des échantillons étiquetés et non étiquetés, et dans lequel la sélection d'un sous-ensemble de caractéristiques consiste à :
sélectionner le sous-ensemble uniquement dans les caractéristiques structurelles sur une ou plusieurs itérations initiales ; et
sélectionner le sous-ensemble dans les caractéristiques structurelles et les caractéristiques de contenu sur une ou plusieurs itérations suivantes se produisant après les itérations initiales.

13. Ordinateur selon la revendication 9, dans lequel la réunion par agrégation des échantillons étiquetée et non étiquetés d'après la similarité des valeurs rassemblées du sous-ensemble de caractéristiques sélectionné consiste à :
réunir par agrégation les échantillons étiquetés et non étiquetés ayant au moins un seuil de mesure de similarité parmi les valeurs rassemblées du sous-ensemble de caractéristiques sélectionné, différents seuils de mesure de similarité étant utilisés sur différentes itérations.

14. Ordinateur selon la revendication 9, dans lequel les itérations produisent un ensemble d'agrégats hiérarchiques contenant l'agrégat et un agrégat enfant situé sous l'agrégat dans une hiérarchie, les modules de programme d'ordinateur exécutables pouvant également être exécutés pour propager l'étiquette depuis l'échantillon étiqueté de l'agrégat vers un échantillon non étiqueté de l'agrégat enfant.

15. Support de stockage non transitoire lisible par ordinateur servant à stocker des modules de programme d'ordinateur pouvant être exécutés pour mettre en oeuvre le procédé selon l'une quelconque des revendications 1 à 8.
